# EUROPEAN PATENT SPECIFICATION

(11) **EP 3 609 222 B1**
(45) Date of publication and mention of the grant of the patent: **18.06.2025**
(21) Application number: 18780702.9
(22) Date of filing: 06.04.2018
(51) Int. Cl.: H04W 24/10, H04W 72/04, H04W 88/06, H04L 5/00, H04W 76/15

(54) **COORDINATING THE NUMBER OF MEASUREMENT CARRIERS BETWEEN A MASTER NODE AND A SECONDARY NODE**
KOORDINIERUNG DER ANZAHL DER MESSTRÄGER ZWISCHEN EINEM HAUPTKNOTEN UND EINEM NEBENKNOTEN
COORDONNATION DU NOMBRE DE PORTEUSES DE MESURE ENTRE UN NOEUD MAÎTRE ET UN NOEUD SECONDAIRE

(30) Priority: 07.04.2017 JP 2017076632
(43) Date of publication of application: 12.02.2020
(73) Proprietor: NTT DOCOMO, INC., Chiyoda-ku Tokyo 100-6150 (JP)
(72) Inventor: TAKAHASHI Hideaki, Tokyo 100-6150 (JP); HAPSARI Wuri Andarmawanti, Tokyo 100-6150 (JP); ABETA Sadayuki, Tokyo 100-6150 (JP)
(74) Representative: Hoffmann Eitle
(86) International application number: PCT/JP2018/014686
(87) International publication number: WO 2018/186482

(56) References cited:
- EP-A1- 3 160 181
- WO-A1-2015/196919
- WO-A1-2018/175470
- JP-A- 2011 514 727
- JP-A- 2013 516 113
- JP-A- 2016 213 805
- US-A1- 2016 330 680
- NEC: "RRM measurement managed by SN in LTE-NR DC", vol. RAN WG2, no. Spokane, USA; 20170403 - 20170407, 3 April 2017 (2017-04-03), XP051245262, Retrieved from the Internet <URL:http://www.3gpp.org/ftp/Meetings_3GPP_SYNC/RAN2/Docs/> [retrieved on 20170403]
- NTT DOCOMO ET AL: "Summary of email discussion [97bis#10][NR] MN/SN measurement coordination", vol. RAN WG2, no. Hangzhou, China; 20170515 - 20170519, 14 May 2017 (2017-05-14), XP051274740, Retrieved from the Internet <URL:http://www.3gpp.org/ftp/Meetings_3GPP_SYNC/RAN2/Docs/> [retrieved on 20170514]
- NEC: "RRM measurement managed by SN in LTE-NR DC", vol. RAN WG2, no. Spokane, USA; 20170403 - 20170407, 25 March 2017 (2017-03-25), XP051254454, Retrieved from the Internet <URL:http://www.3gpp.org/ftp/tsg_ran/WG2_RL2/TSGR2_97bis/Docs/> [retrieved on 20170325]
- NTT DOCOMO, INC.: "Master node initiated secondary node change", 3GPP TSG-RAN WG2 #97BIS R2-1703707, 25 March 2017 (2017-03-25), XP051254612, Retrieved from the Internet <URL:http://www.3gpp.org/ftp/tsg_ran/WG2_RL2/TSGR2_97bis/Docs/>
- ZTE ET AL.: "Consideration on the measurement coordination in LTE/NR tight interworking", 3GPP TSG-RAN WG2 #97 R2-1701116, 4 February 2017 (2017-02-04), pages 1 - 5, XP051223369, Retrieved from the Internet <URL:http://www.3gpp.org/ftp/tsg_ran/WG2_RL2/TSGR2_97/Docs/>

## Description

### TECHNICAL FIELD

The present invention relates to a radio communication system and a user device that executes dual connectivity with a master node and a secondary node.

### BACKGROUND ART

3rd Generation Partnership Project (3GPP) specifies Long Term Evolution (LTE), and with an aim of further speeding, specifies LTE-Advanced (hereinafter, it is assumed that the LTE includes the LTE-Advanced). Moreover, in the 3GPP, specifications of a successor system of the LTE called 5G New Radio (NR) and like are being studied.

Specifically, Non-Patent Document 1 explains that, in dual connectivity (DC) using a radio base station (eNB) of the LTE system and a radio base station (gNB) of the NR system, the eNB and the gNB each include an entity of a radio resource control layer (RRC layer) (RRC entity).

In DC of the LTE (eNB) only, the RRC entity of a master node (MeNB) had an overall control on the RRC entity of a user device (User Equipment, UE) that includes the RRC entity of a secondary node (SeNB). However, in DC of the LTE (eNB) and the NR (gNB) (LTE-NR DC), the secondary node, too, can transmit an RRC message directly to the UE. Moreover, the UE, too, can directly transmit to the secondary node a measurement report (Measurement Report) of a reception quality of a neighbor cell belonging to a secondary cell group (SCG).

Non-Patent Document 2 describes RRM measurement managed by SN in LTE-NR DC. Both the MN and the SN can configure the separate measurement configuration to a UE in LTE-NR DC. It is proposed that the SN should configure the measurement in coordination with the MN.

Patent Document 1, which is published after the priority date of the present application on September 27, 2018, describes a secondary node (SN) in evolved universal mobile telecommunications system terrestrial radio access network new radio - dual connectivity (EN-DC) with a master node (MN) can directly provide measurement configuration and receive measurement reports from a UE and/or coordinate measurement configuration and reporting with the MN.

### PRIOR ART DOCUMENT

Non-Patent Document 1: 3GPP TR 38.804 V14.0.0 Section 5.2.2.2 Control plane architecture for Dual Connectivity between LTE and NR, 3rd Generation Partnership Project; Technical Specification Group Radio Access Network; Study on New Radio Access Technology; Radio Interface Protocol Aspects (Release 14), 3GPP, March 2017
Non-Patent Document 2: "RRM measurement managed by SN in LTE-NR DC", 3GPP DRAFT; R2-1703401
Patent Document 1: WO 2018/175470 A1

### SUMMARY OF THE INVENTION

As explained above, the eNB and the gNB can independently control their own RRC entities during the DC of different radio access technologies (RAT), that is, the LTE (the eNB) and the NR (the gNB). Therefore, there was a problem of how to cause the UE to transmit a measurement report.

For example, when a master node is the eNB and a secondary node is the gNB, and the eNB sets an event (for example, an event equivalent to Event B1 stipulated in 3GPP TS36.331) for a carrier of a different RAT (that is, the NR), and the gNB sets an event (equivalent to Event A4) for a carrier of its own RAT (that is, the NR), the configuration settings may conflict with each other.

The present invention has been made in view of the above circumstances. It is an object of the present invention to provide a radio communication system and a user device capable of performing appropriate measurement report operations even during dual connectivity (DC) between the LTE (eNB) and the NR (gNB).

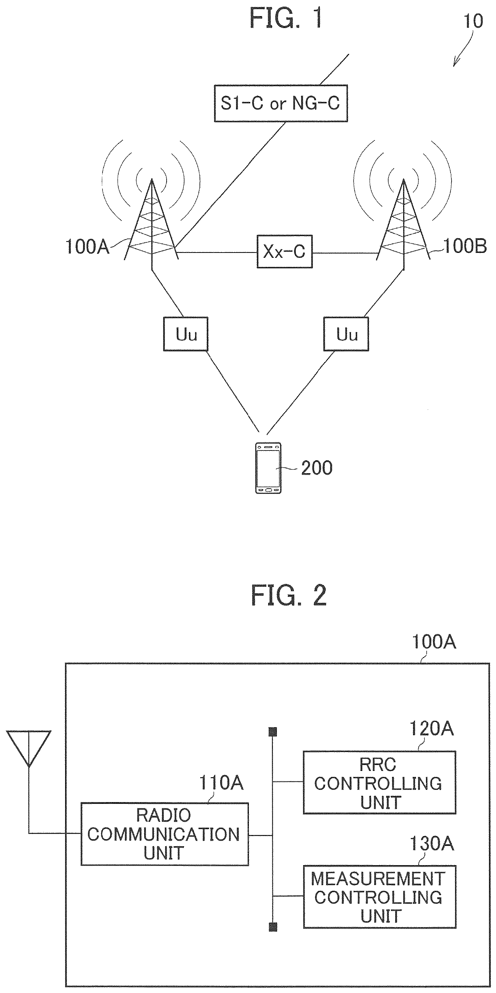

This object is accomplished by the subject-matter of the independent claims. The dependent claims concern particular embodiments. In the following, the invention is best understood in view of particularly figures 2-5. The remaining embodiments, aspects and examples disclosed below are included for illustrative purposes and for facilitating the understanding of the invention.

### BRIEF DESCRIPTION OF DRAWINGS

FIG. 1 is an overall structural diagram of a radio communication system 10.
FIG. 2 is a functional block diagram of eNB 100A.
FIG. 3 is a functional block diagram of gNB 100B.
FIG. 4 is a functional block diagram of UE 200.
FIG. 5 is a diagram for explaining measurement report (Measurement Report) operations (Operation Example 1) performed during LTE-NR DC.
FIG. 6 is a diagram for explaining priority processing of measurement object performed by the eNB 100A (master node) and the gNB 100B (secondary node) (first modification of Operation Example 1).
FIG. 7 is a diagram for explaining priority processing of the measurement object performed by the eNB 100A (the master node) and the gNB 100B (the secondary node) (second modification of Operation Example 1).
FIG. 8 is a diagram for explaining priority processing of the measurement object performed by the eNB 100A (the master node) and the gNB 100B (the secondary node) (third modification of Operation Example 1).
FIG. 9 is a diagram for explaining measurement report (Measurement Report) operations (Operation Example 2) performed during the LTE-NR DC.
FIG. 10 is a diagram for explaining measurement report (Measurement Report) operations (first modification of Operation Example 2) performed during the LTE-NR DC.
FIG. 11 is a diagram for explaining measurement report (Measurement Report) operations (second modification of Operation Example 2) performed during the LTE-NR DC.
FIG. 12 is a diagram for explaining measurement report (Measurement Report) operations (Operation Example 3) performed during the LTE-NR DC.
FIG. 13 is a diagram showing an example of hardware configuration of the eNB 100A, the gNB 100B, and the UE 200.

### MODES FOR CARRYING OUT THE INVENTION

Exemplary embodiments of the present invention are explained below with reference to the accompanying drawings. In the drawings, structural elements having the same function or configuration are indicated by the same or similar reference numerals and the explanation thereof is appropriately omitted.

### (1) Overall Structural Configuration of Radio Communication System

FIG. 1 is an overall structural diagram of a radio communication system 10 according to the present embodiment. The radio communication system 10 is a radio communication system using the Long Term Evolution (LTE) and the 5G New Radio (NR). The radio communication system 10 includes a radio base station 100A (hereinafter, "eNB 100A") and a radio base station 100B (hereinafter, "gNB 100B"). The radio communication system 10 further includes a user device (user equipment) 200 (hereinafter, "UE 200"). The eNB 100A and the gNB 100B perform radio communication with the UE 200 via an RRC layer.

In the present embodiment, the eNB 100A is a radio base station (eNB) of the LTE system (E-UTRA system) and can constitute a master node. The gNB 100B is a radio base station (gNB) of the NR system and can constitute a secondary node.

The radio communication system 10 supports dual connectivity (hereinafter, "LTE-NR DC") using the eNB 100A of the LTE system and the gNB 100B of the NR system. In the DC, the master node and the secondary node are simultaneously connected to the UE 200. In other words, the UE 200 can simultaneously establish connection of a radio resource control layer (the RRC layer) with the eNB 100A and the gNB 100B, and can transmit / receive user data.

As shown in FIG. 1, as the architecture of a control plane for realizing the LTE-NR DC, the eNB 100A includes S1-C or NG-C interface for a not-shown core network. Moreover, the eNB 100A and the gNB 100B are connected via Xx-C interface. The UE 200 transmits / receives the user data to and from the eNB 100A and the gNB 100B via Uu interface.

### (2) Functional Block Configuration of Radio Communication System

A functional block configuration of the radio communication system 10 is explained below. Specifically, functional block configurations of the eNB 100A, the gNB 100B and the UE 200 are explained below.

### (2.1) eNB 100A and gNB 100B

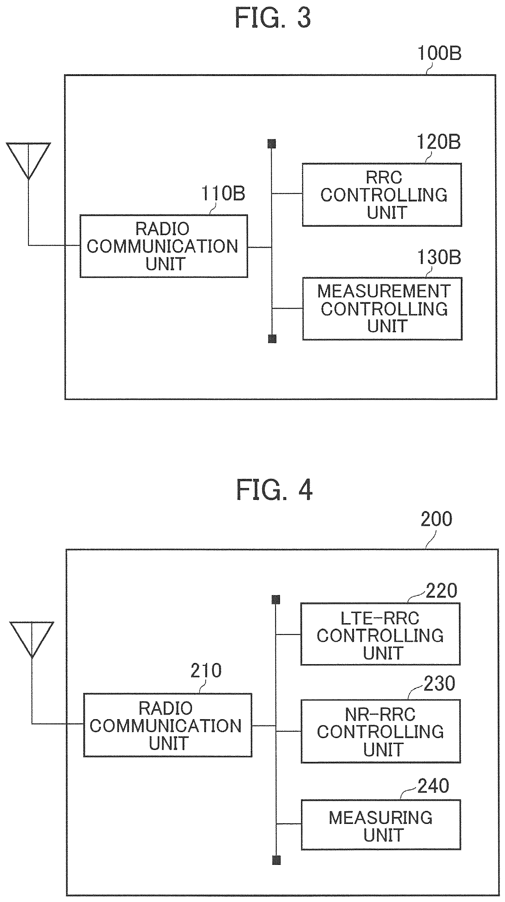

FIG. 2 is a functional block diagram of the eNB 100A, and FIG. 3 is a functional block diagram of the gNB 100B. As shown in FIGS. 2 and 3, the eNB 100A and the gNB 100B include similar functional blocks.

Specifically, the eNB 100A includes a radio communication unit 110A, an RRC controlling unit 120A, and a measurement controlling unit 130A. The gNB 100B includes a radio communication unit 110B, an RRC controlling unit 120B, and a measurement controlling unit 130B. Functional blocks of the eNB 100A will be mainly explained below.

The radio communication unit 110A performs radio communication using the LTE system. Specifically, the radio communication unit 110A transmits to / receives from the UE 200 a radio signal using the LTE system. An RRC layer message, user data, and the like are multiplexed in the radio signal.

The RRC controlling unit 120A performs control in the RRC layer. In the present embodiment, the RRC controlling unit 120A constitutes a first RRC controlling unit. Specifically, the RRC controlling unit 120A constitutes an RRC entity using the LTE, and transmits / receives the RRC message. Accordingly, the RRC controlling unit 120A controls establishment of RRC connection with the UE 200, release thereof, and the like.

In the present embodiment, the RRC controlling unit 120A can determine for the eNB 100A and the gNB 100B Measurement Configuration (measurement configuration) that indicates configuration settings of the measurement performed in a target cell by the UE 200.

The measurement controlling unit 130A controls reception quality measurement of a target cell performed by the UE 200. In the present embodiment, the measurement controlling unit 130A constitutes a first measurement controlling unit. Specifically, as target cells for the measurement performed by the UE 200, the measurement controlling unit 130A controls reception quality measurement of a serving cell and a neighbor cell of the UE 200.

More specifically, the measurement controlling unit 130A determines settings of the Measurement Configuration (the measurement configuration). The Measurement Configuration includes a measurement object, a measurement ID and a report configuration. The measurement object, the measurement ID, and the report configuration are as explained in detail in Chapter 5.5 of 3GPP TS36.331. For example, as the measurement object, information on carrier frequency to be measured is included.

Accordingly, the Measurement Configuration indicates configuration settings of the measurement of the target cells performed by the UE 200. In the present embodiment, the Measurement Configuration can be commonly set for the measurement controlling unit 130A and the measurement controlling unit 130B of the gNB 100B.

Alternatively, only the measurement object and the measurement ID from the Measurement Configuration can be commonly set for the measurement controlling unit 130A and the measurement controlling unit 130B. Alternatively, only the measurement object from the Measurement Configuration can be commonly set for the measurement controlling unit 130A and the measurement controlling unit 130B.

Moreover, after the RRC controlling unit 120A determines the Measurement Configuration for the eNB 100A and the gNB 100B, the measurement controlling unit 130A notifies the measurement controlling unit 130B of the determined Measurement Configuration.

Furthermore, the measurement controlling unit 130A can share information on the number of carriers to be measured by the UE 200 according to the Measurement Configuration with the measurement controlling unit 130B.

Specifically, the measurement controlling unit 130A provides to the measurement controlling unit 130B the information on the number of carriers to be measured according to the measurement object of the Measurement Configuration determined by the measurement controlling unit 130A. Moreover, the measurement controlling unit 130A acquires from the measurement controlling unit 130B the information on the number of carriers to be measured that is determined by the measurement controlling unit 130B.

Except for the configuration in which the corresponding RAT is the NR, the radio communication unit 110B, the RRC controlling unit 120B, and the measurement controlling unit 130B of the gNB 100B shown in FIG. 3 have substantially the same functions as the radio communication unit 110A, the RRC controlling unit 120A, and the measurement controlling unit 130A of the eNB 100A.

In the present embodiment, the RRC controlling unit 120B constitutes a second RRC controlling unit that performs control in the RRC layer, and the measurement controlling unit 130B constitutes a second measurement controlling unit that controls the reception quality measurement of the target cells performed by the UE 200.

### (2.2) UE 200

FIG. 4 is a functional block diagram of the UE 200. As shown in FIG. 4, the UE 200 includes a radio communication unit 210, an LTE-RRC controlling unit 220, an NR-RRC controlling unit 230, and a measuring unit 240.

The radio communication unit 210 performs radio communication using the LTE system and the NR system. Specifically, the radio communication unit 210 transmits to / receives from the eNB 100A a radio signal using the LTE system. Moreover, the radio communication unit 210 transmits to / receives from the gNB 100B a radio signal using the NR system. The RRC layer message, user data, and the like are multiplexed in the radio signal.

The LTE-RRC controlling unit 220 performs control in the RRC layer for the LTE (the eNB 100A). Specifically, the LTE-RRC controlling unit 220 constitutes an RRC entity using the LTE, and transmits / receives the RRC message. Accordingly, the LTE-RRC controlling unit 220 performs establishment of the RRC connection with the eNB 100A, release thereof, and the like.

The NR-RRC controlling unit 230 performs control in the RRC layer for the NR (the gNB 100B) . Specifically, the NR-RRC controlling unit 230 constitutes an RRC entity using the NR, and transmits / receives the RRC message. Accordingly, the NR-RRC controlling unit 230 performs establishment of the RRC connection with the gNB 100B, release thereof, and the like.

The measuring unit 240 measures, based on the Measurement Configuration received from the eNB 100A and the gNB 100B, reception quality of the target cells. Specifically, the measuring unit 240 receives the Measurement Configuration via the RRC layer from each of the eNB 100A and the gNB 100B. The Measurement Configuration is included in RRC Connection Reconfiguration, which is a type of the RRC message, and the like.

Particularly, when the number of carriers to be measured exceeds an upper limit set in the UE 200, the measuring unit 240 can disable the measurement of carriers that exceed that upper limit. The upper limit is determined based on the number of carriers that can be simultaneously measured (the number of carriers to be measured) by the UE 200.

When the number of carriers to be measured exceeds the upper limit set in the UE 200, the measuring unit 240 can determine carriers for which the measurement is to be disabled based on the priority assigned to the target cells or the carriers to be measured.

Furthermore, when the measurement based on the Measurement Configuration is instructed from each of the eNB 100A and the gNB 100B, and an event in which the respective measurement result is to be transmitted to the eNB 100A and the gNB 100B at the same time occurs, the measuring unit 240 can transmit the measurement result to one of the eNB 100A and the gNB 100B at that point of time. In this situation, the measuring unit 240 transmits the measurement result to the other one at a time later than that point of time.

Furthermore, when the report transmission timings of the measurement results conflict in the manner explained above, the measuring unit 240 can determine the measurement result to transmit first based on the priority assigned to the target cell or the measurement.

### (3) Operation of Radio Communication System

Operation of the radio communication system 10 is explained below. Specifically, the operations related to the Measurement Configuration (the measurement configuration) during the dual connectivity (the LTE-NR DC) using the eNB 100A of the LTE system (the E-UTRA system) and the gNB 100B of the NR system will be explained below.

Specifically, Operation Examples 1 to 3 of the measurement report (Measurement Report) based on the Measurement Configuration in the LTE-NR DC will be explained below.

### (3.1) Operation Example 1

In the present operation example, the LTE RRC entity (LTE RRC) and the NR RRC entity (NR RRC) operate independently.

### (3.1.1) Basic Operation Example

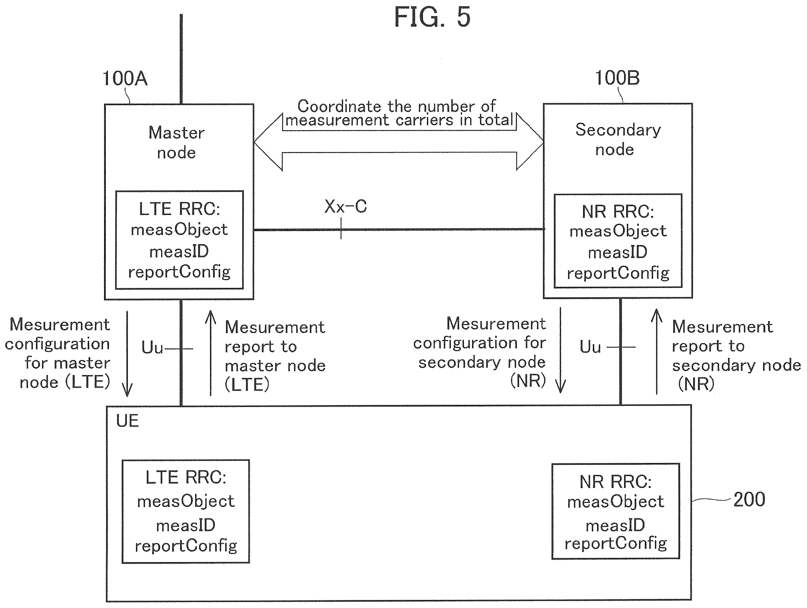

FIG. 5 is a diagram for explaining measurement report (Measurement Report) operations (Operation Example 1) performed during the LTE-NR DC.

As shown in FIG. 5, the network side, specifically, the eNB 100A (the master node), the gNB 100B (the secondary node), and the UE 200 completely independently set the Measurement Configurations (measurement object / measurement ID / report configuration) for the LTE RRC and the NR RRC.

The UE 200 measures the target cell based on the Measurement Configuration received from each of the eNB 100A and the gNB 100B. Moreover, the UE 200 transmits to each of the eNB 100A and the gNB 100B the Measurement Report that includes the measurement result of the target cell.

In other words, in the present operation example, the LTE RRC and the NR RRC can simultaneously set the measurement objects and the measurement IDs for the measurement of the same carrier frequency. However, the information on the number of carriers to be measured is shared between the eNB 100A and the gNB 100B.

Specifically, as explained above, by exchanging the respective information on the number of carriers to be measured, the eNB 100A (the measurement controlling unit 130A) and the gNB 100B (the measurement controlling unit 130B) adjust the number of carriers to be measured such that the number does not exceed the number of measurements that the UE 200 can perform simultaneously (the upper limit) . That is, the upper limit is the total of the number of carriers to be measured set in the LTE RRC and the same set in the NR RRC.

More specifically, the eNB 100A determines the number of carriers based on the upper limit set in the LTE, and the gNB 100B determines the number of carriers based on the upper limit set in the NR. Furthermore, the eNB 100A and the gNB 100B exchange the respective information on the determined number of carriers, and adjust the total of the determined numbers of carriers so as not to exceed the number of measurements that the UE 200 can perform simultaneously.

### (3.1.2) First Modification

In Operation Example 1, the information on the number of carriers to be measured is shared between the eNB 100A and the gNB 100B. However, if such information is not shared, there is a possibility that the number of carriers to be measured exceeds the upper limit. In such a case, when the total of the number of carriers to be measured set by the LTE RRC and the same set by the NR RRC exceeds the upper limit, the UE 200 can be configured so as to arbitrarily disable any number of the measurement objects (carrier frequencies) set by the secondary node (the gNB 100B in the present embodiment) such that the number of carriers becomes less than or equal to the upper limit.

Alternatively, the eNB 100A or the gNB 100B can be configured so as to set the measurement priority for a master cell group (MCG) or a secondary cell group (SCG) as low, and the UE 200 can be configured so as to disable the measurement objects related to the cell group with the low priority such that the number of carriers becomes less than or equal to the upper limit.

Alternatively, the eNB 100A or the gNB 100B can be configured so as to assign priority to each measurement ID, and the UE 200 can be configured so as to disable the measurement objects corresponding to the measurement ID with low priority such that the number of carriers becomes less than or equal to the upper limit.

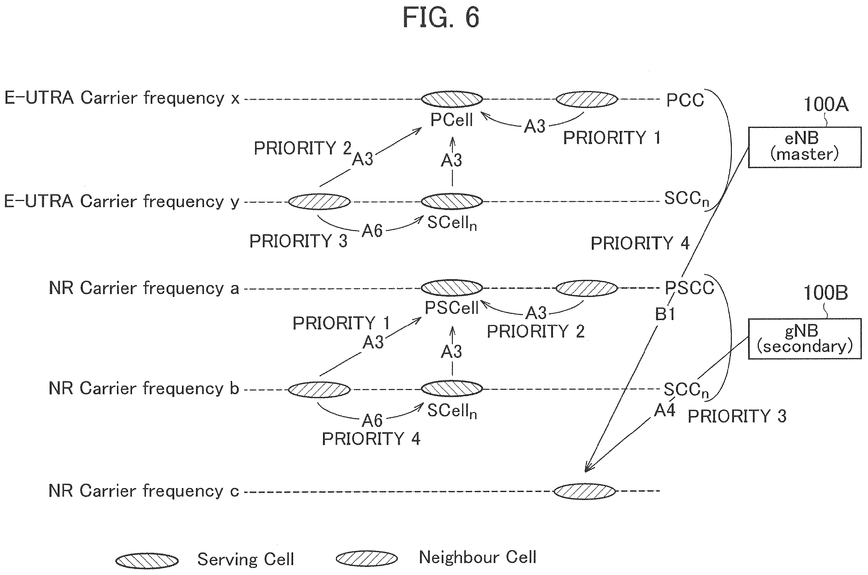

The first modification will be explained more specifically below with reference to FIG. 6. FIG. 6 is a diagram for explaining priority processing of the measurement object performed by the eNB 100A (the master node) and the gNB 100B (the secondary node) (first modification of Operation Example 1) .

In FIG. 6, x and y (LTE/E-UTRA), and a, b and c (NR) are assigned as carrier frequencies (specifically, frequencies of CC). Also, A3, A4, A6, and B1 shown in the figure indicate events stipulated in the 3GPP TS36.331, specifically, the events are stipulated as follows:

▪ A3: Neighbor becomes offset better than PCell / PSCell
▪ A4: Neighbor becomes better than absolute threshold
▪ A6: Neighbor becomes offset better than SCell
▪ B1: Inter RAT neighbor becomes better than threshold

As shown in FIG. 6, measurements with priority 1 to 4 (priority 1 being the highest priority) are set for cells in the MCG (the target cells), specifically, the neighbor cells set by the eNB 100A. Similarly, measurements with priority 1 to 4 are also set for cells in the SCG (the target cells) set by the gNB 100B.

In such a configuration, when the upper limit, which is the number of measurements that the UE 200 (not shown in FIG. 6) can simultaneously perform (specifically, the number of carriers to be measured) is seven, the UE 200 cannot perform all the measurements (eight in total), and needs to disable any one of the measurements.

For example, when the priority of the SCG is set lower than the priority of the MCG, the UE 200 disables the priority 4 measurement (NR Carrier frequency using Event A6) set by the gNB 100B.

On the contrary, when the priority of the MCG is set lower than the priority of the SCG, the UE 200 disables the priority 4 measurement (NR Carrier frequency c using Event B1) set by the eNB 100A.

### (3.1.3) Second Modification

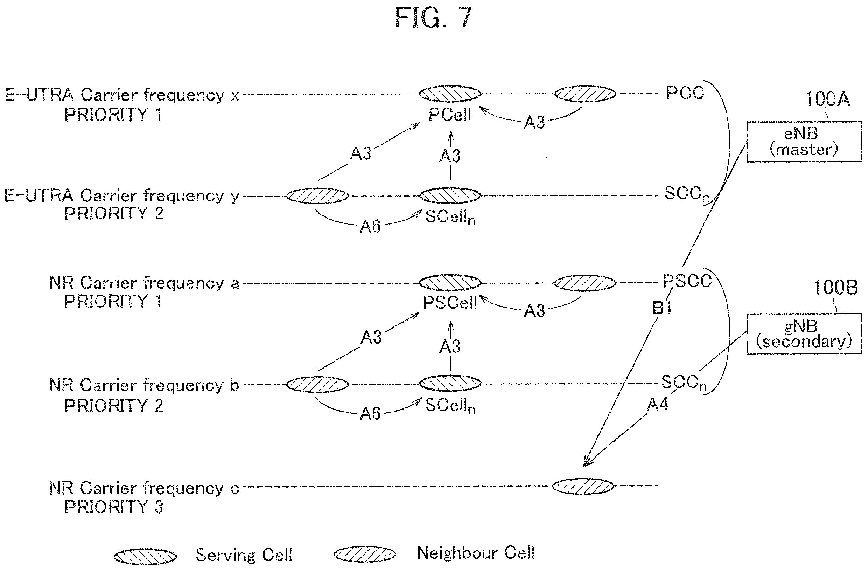

FIG. 7 is a diagram for explaining priority processing of the measurement object performed by the eNB 100A (the master node) and the gNB 100B (the secondary node) (a second modification of Operation Example 1). Operations that are different from that of the first modification will be mainly explained below.

In the present modification, instead of cells, priorities are set for carriers. However, the configuration of cells in the MCG and the SCG and the event setting state are the same as that in the first modification.

In the present modification, when the upper limit, which is the number of measurements that the UE 200 (not shown in FIG. 7) can simultaneously perform (specifically, the number of carriers to be measured), is four, the UE 200 cannot perform all the measurements (five in total) and needs to disable one of the measurements.

For example, when the priority of the SCG is set lower than the priority of the MCG, the UE 200 disables the priority 3 measurement (NR Carrier frequency c using Event A4) set by the gNB 100B.

On the contrary, when the priority of the MCG is set lower than the priority of the SCG, the UE 200 disables the priority 2 measurement (E-UTRA Carrier frequency y using Event A3 and A6) set by the eNB 100A.

### (3.1.4) Third Modification

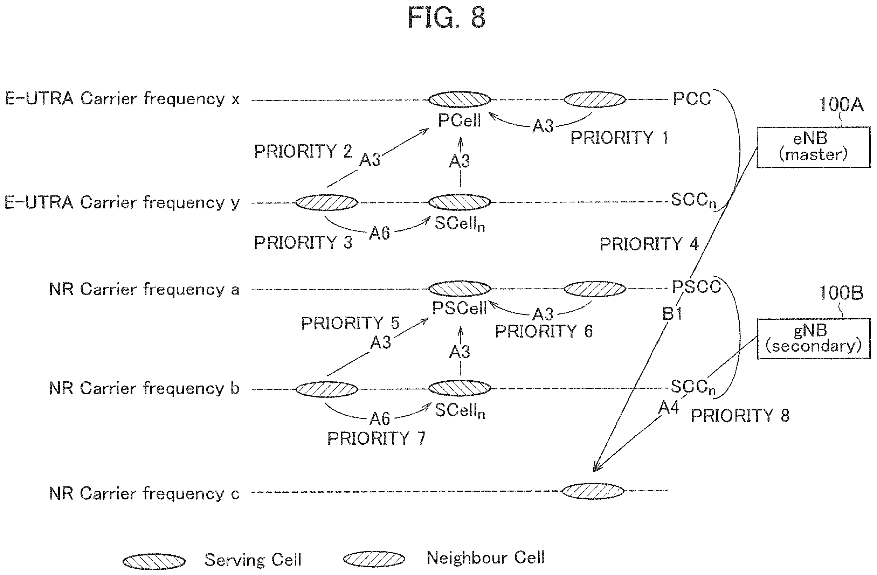

FIG. 8 is a diagram for explaining priority processing of the measurement object performed by the eNB 100A (the master node) and the gNB 100B (the secondary node) (a third modification of Operation Example 1). Operations that are different from that of the first modification will be mainly explained below.

As shown in the present operation example, when the LTE RRC of the eNB 100A and the NR RRC of the gNB 100B operate independently, there is a possibility that an event in which the UE 200 (not shown in FIG. 8) needs to transmit the Measurement Report to each of the RRC entities simultaneously, in other words, at the same time occurs.

In such a situation, the UE 200 can transmit the Measurement Report (the measurement result) to one of the eNB 100A (the LTE RRC) and the gNB 100B (the NR RRC) at that point of time, and transmit the Measurement Report to the other one at a time later than that point of time.

In other words, the UE 200 can delay the transmission of one of the Measurement Reports till the next transmission time. Certainly, when possible, the UE 200 can transmit both the Measurement Reports at the same time. Furthermore, one of the eNB 100A and the gNB 100B can instruct the UE 200 on which one between the LTE RRC (that is, the MCG) and the NR RRC (that is, the SCG) is to be prioritized.

Alternatively, as shown in FIG. 8, one of the eNB 100A and the gNB 100B can set priority (1 to 8) for each measurement using the Event and instruct the same to the UE 200.

Based on the specified priorities, the UE 200 transmits first a Measurement Report that includes a result of measurement with high priority. Moreover, if the Measurement Report includes a plurality of measurement results, the UE 200 can simply give priority to a Measurement Report that includes a larger number of measurement results, or can compare the average value of the priorities assigned to the measurements in the MCG to the average value of the priorities assigned to the measurements in the SCG, and transmit first a Measurement Report, with a low average value (in other words, a relatively high priority) .

### (3.2) Operation Example 2

In the present operation example, the LTE RRC entity (the LTE RRC) and the NR RRC entity (the NR RRC) use a common Measurement Configuration.

### (3.2.1) Basic Operation Example

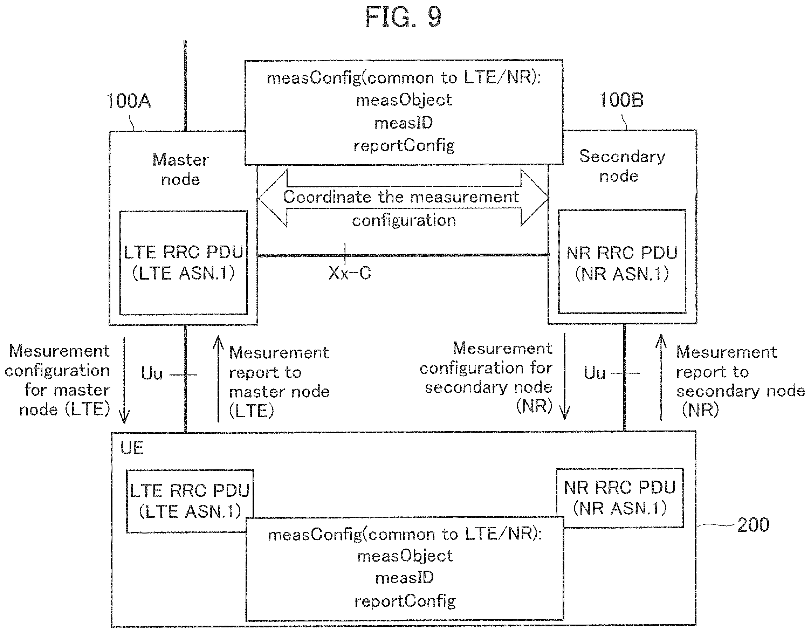

FIG. 9 is a diagram for explaining measurement report (Measurement Report) operations (Operation Example 2) performed during the LTE-NR DC.

As shown in FIG. 9, the eNB 100A (the master node) and the gNB 100B (the secondary node) use a common Measurement Configuration. As explained above, the Measurement Configuration includes the measurement object, the measurement ID, and the report configuration.

Settings of the Measurement Configuration can be performed from any of the eNB 100A and the gNB 100B. For example, when the Measurement Configuration is set from the eNB 100A (the master node), the eNB 100A transmits RRC PDU (LTE RRC PDU in the figure) encoded in ASN.1 of the LTE RRC to the UE 200, and notifies the UE 200 of the settings of the Measurement Configuration. In other words, the settings of the Measurement Configuration are included in the LTE RRC PDU.

On the other hand, when the Measurement Configuration is set from the gNB 100B (the secondary node), the gNB 100B transmits RRC PDU (NR RRC PDU in the figure) encoded in ASN.1 of the NR RRC to the UE 200, and notifies the UE 200 of the settings of the Measurement Configuration. In other words, the settings of the Measurement Configuration are included in the NR RRC PDU.

Alternatively, the transmission destination (the eNB 100A or the gNB 100B) of the Measurement Report can be specified in the report configuration. However, the overall settings of the Measurement Configuration are set by the eNB 100A and the gNB 100B by coordinating with each other.

### (3.2.2) First Modification

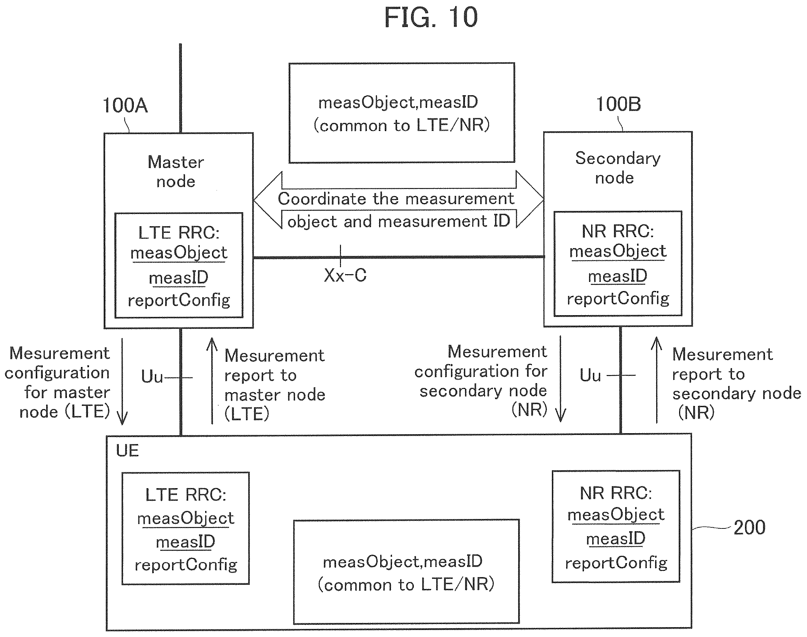

FIG. 10 is a diagram for explaining measurement report (Measurement Report) operations (a second modification of Operation Example 2) performed during the LTE-NR DC. In Operation Example 2 explained above, the measurement object, the measurement ID and the report configuration were commonly set. In the present modification, however, only the measurement object and the measurement ID (parts underlined in the figure) are commonly set. The report configuration may be different between the LTE RRC and the NR RRC.

Settings of the Measurement Configuration are independently set by the eNB 100A and the gNB 100B. Moreover, the transmission destination (the eNB 100A or the gNB 100B) of the Measurement Report depends on (is associated with) the RAT (the LTE or the NR) specified in the report configuration.

For example, if the report configuration is an information element (IE) encoded in the ASN.1 of the LTE RRC, the Measurement Report is transmitted to the eNB 100A. On the other hand, if the report configuration is an information element (IE) encoded in the ASN.1 of the NR RRC, the Measurement Report is transmitted to the gNB 100B.

The measurement object and the measurement ID are set by the eNB 100A and the gNB 100B by coordinating with each other.

### (3.2.3) Second Modification

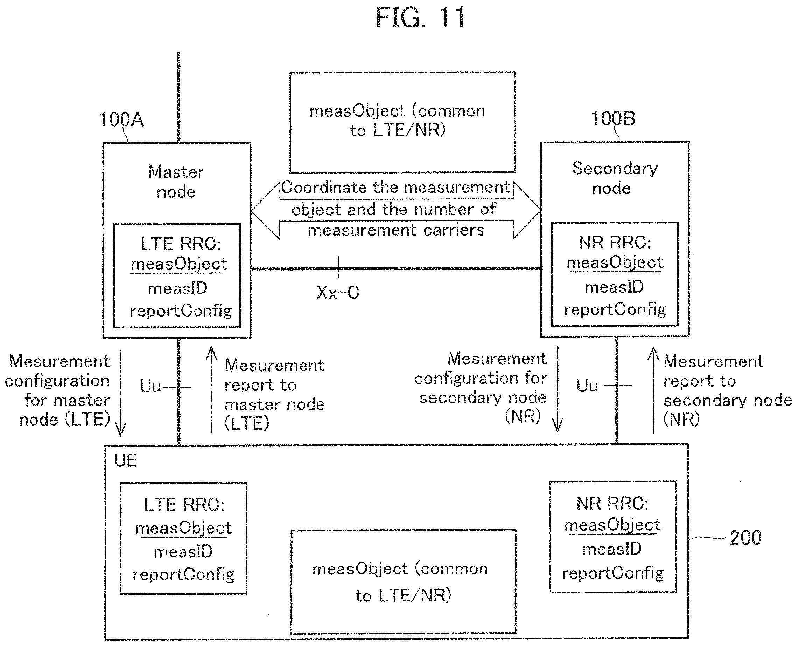

· FIG. 11 is a diagram for explaining measurement report (Measurement Report) operations (second modification of Operation Example 2) performed during the LTE-NR DC. In Operation Example 2 explained above, the measurement object, the measurement ID and the report configuration were commonly set. In the present modification, however, only the measurement object (parts underlined in the figure) is commonly set.

Similar to the first modification, settings of the Measurement Configuration are independently set by the eNB 100A and the gNB 100B. Moreover, the transmission destination (the eNB 100A or the gNB 100B) of the Measurement Report depends on (is associated with) the RAT (the LTE or the NR) specified in the report configuration.

The eNB 100A and the gNB 100B set the measurement object by coordinating with each other. Moreover, the eNB 100A and the gNB 100B also set the number of carriers to be measured by coordinating with each other.

### (3.3) Operation Example 3

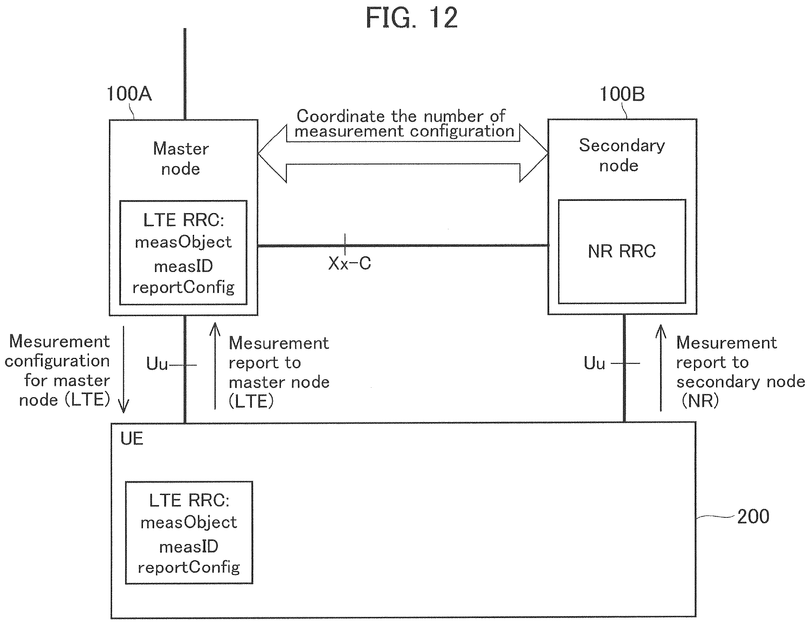

FIG. 12 is a diagram for explaining measurement report (Measurement Report) operations (Operation Example 3) performed during the LTE-NR DC.

In the present operation example, the RRC entity of the eNB 100A (the master node), which is referred to as the LTE-RRC in the present embodiment, also sets the Measurement Configuration (the measurement object / the measurement ID / the report configuration) for the NR.

The eNB 100A sets the overall settings of the Measurement Configuration by coordinating with the gNB 100B. The Measurement Configuration notified to the UE 200 by the eNB 100A is notified to the gNB 100B by the eNB 100A via Xx-C interface. For example, the Measurement Configuration can be notified by using SCG-ConfigInfo message stipulated in the TS36.331.

The transmission destination (the eNB 100A or the gNB 100B) of the Measurement Report depends on (is associated with) the RAT (the LTE or the NR) specified in the report configuration.

### (4) Effects and Advantages

The following operational effects can be obtained with the embodiments explained above. Specifically, in Operation Example 1 explained above, the information on the number of carriers to be measured is shared between the eNB 100A and the gNB 100B. Therefore, independent Measurement Configurations can be set for the LTE RRC entity (the LTE RRC) and the NR RRC entity (the NR RRC), making it possible to not exceed the number of measurements that the UE 200 can perform simultaneously (the number of carriers to be measured), that is, the upper limit.

Accordingly, even during the LTE-NR DC, appropriate Measurement Report operations can be performed.

In the first modification of Operation Example 1, if the number of carriers to be measured exceeds the upper limit set in the UE 200, the UE 200 can disable the measurement of carriers that exceed the upper limit. Therefore, even when the information on the number of carriers to be measured is not shared between the eNB 100A and the gNB 100B, the measurement can be performed without the number thereof exceeding the upper limit.

Furthermore, because priority can be assigned to a measurement (specifically, a measurement associated with the target cell or the carrier to be measured) to be disabled, important measurements can be performed with high probability.

In the second modification of Operation Example 1, when an event in which the respective Measurement Report is to be transmitted to the eNB 100A and the gNB 100B at the same time occurs, the UE 200 can transmit the Measurement Report to one of the eNB 100A and the gNB 100B at that point of time and transmit the Measurement Report to the other one at a time later than that point of time. Accordingly, even when the report transmission timings of the Measurement Reports to be transmitted to the eNB 100A and the gNB 100B conflict, the Measurement Reports can be reliably transmitted.

Furthermore, because priority can be assigned to the Measurement Reports to determine which Measurement Report (specifically, the Measurement Report associated with the target cell or the measurement) is to be transmitted first, important Measurement Reports can be transmitted with high probability.

According to Operation Example 2, the Measurement Configuration is commonly set for the eNB 100A (the measurement controlling unit 130A) and the gNB 100B (the measurement controlling unit 130B). Therefore, uniform Measurement Configuration can be applied to the LTE and the NR. With such configuration, even during the LTE-NR DC, appropriate Measurement Report operations can be performed.

Moreover, in the first and the second modifications of Operation Example 2, only a part of the settings (the measurement object and the measurement ID) of the Measurement Configuration can be commonly set for the eNB 100A and the gNB 100B. Therefore, an appropriate common Measurement Configuration can be set by considering the implementation of the LTE RRC and the NR RRC, and the like.

In Operation Example 3, the eNB 100A (the RRC controlling unit 120A) determines the Measurement Configuration for each of the eNB 100A and the gNB 100B, and the eNB 100A (the measurement controlling unit 130A) notifies the gNB 100B (the measurement controlling unit 130B) of the determined Measurement Configuration. Accordingly, the Measurement Configuration can be set as guided by the eNB 100A (the master node), and appropriate Measurement Report operations can be performed even during the LTE-NR DC.

Thus, according to the present embodiments, even during the LTE-NR DC, the eNB 100A and the gNB 100B coordinate with each other regarding the setting of the Measurement Configuration, making it possible for the UE 200 to perform appropriate Measurement Report operations. With such configuration, even during the LTE-NR DC, communication quality of the entire radio communication system 10 can be maintained and further improved, and radio resources can be efficiently utilized.

### (5) Other Embodiments

Although the contents of the present invention have been explained above by using the embodiments, it is obvious for a person skilled in the art that the present invention is not limited to those embodiments and that various modifications and improvements thereof are possible.

For example, in the embodiments explained above, the eNB 100A is a radio base station (eNB) of the LTE system and constitutes the master node, whereas the gNB 100B is a radio base station (gNB) of the NR system and constitutes the secondary node. However, this configuration can be reversed. In other words, the radio base station (gNB) of the NR system can constitute the master node and the radio base station (eNB) of the LTE system can constitute the secondary node.

Furthermore, the block diagrams used for explaining the embodiments (FIGS. 2 to 4) show functional block diagrams. Those functional blocks (structural components) can be realized by a desired combination of hardware and / or software. Means for realizing each functional block is not particularly limited. That is, each functional block may be realized by one device combined physically and / or logically. Alternatively, two or more devices separated physically and / or logically may be directly and / or indirectly connected (for example, wired and / or wireless) to each other, and each functional block may be realized by these plural devices.

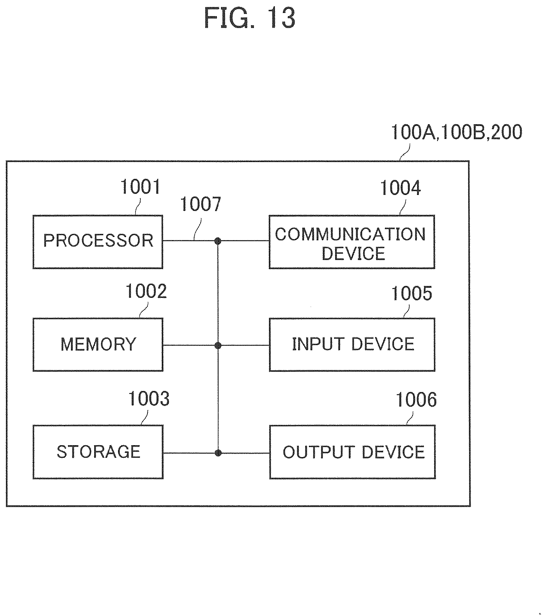

Furthermore, the eNB 100A, the gNB 100B, and the UE 200 (devices) explained above can function as a computer that performs the processing of the present invention. FIG. 13 is a diagram showing an example of a hardware configuration of the devices. As shown in FIG. 13, each of the devices can be configured as a computer device including a processor 1001, a memory 1002, a storage 1003, a communication device 1004, an input device 1005, an output device 1006, and a bus 1007.

Furthermore, the functional blocks of the devices (see FIGS. 2 to 4) can be realized by any of hardware elements of the computer device or a desired combination of the hardware elements.

The processor 1001, for example, operates an operating system to control the entire computer. The processor 1001 can be configured with a central processing unit (CPU) including an interface with a peripheral device, a control device, a computing device, a register, and the like.

The memory 1002 is a computer readable recording medium and is configured, for example, with at least one of ROM (Read Only Memory), EPROM (Erasable Programmable ROM), EEPROM (Electrically Erasable Programmable ROM), RAM (Random Access Memory), and the like. The memory 1002 can be called register, cache, main memory (main memory), and the like. The memory 1002 can store therein a computer program (computer program codes), software modules, and the like that can execute the method according to the above embodiments.

The storage 1003 is a computer readable recording medium. Examples of the storage 1003 include an optical disk such as CD-ROM (Compact Disc ROM), a hard disk drive, a flexible disk, a magneto-optical disk (for example, a compact disk, a digital versatile disk, a Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (a transmission / reception device) capable of performing communication between computers via a wired and / or wireless network. The communication device 1004 is also called, for example, a network device, a network controller, a network card, a communication module, and the like.

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

In addition, the manner of notification of information is not limited to the one explained in the embodiments, and the notification may be performed in other manner. For example, the notification of information can be performed by physical layer signaling (for example, DCI (Downlink Control Information), UCI (Uplink Control Information)), upper layer signaling (for example, RRC signaling, MAC (Medium Access Control) signaling, notification information (MIB (Master Information Block), SIB (System Information Block)), other signals, or a combination thereof. In addition, the RRC signaling can be called an RRC message, and the RRC signaling can be, for example, an RRC Connection Setup message, an RRC Connection Reconfiguration message, and the like.

Furthermore, the input / output information can be stored in a specific location (for example, a memory) or can be managed in a management table. The information to be input / output can be overwritten, updated, or added. The information can be deleted after outputting. The inputted information can be transmitted to another device.

The order of the sequences, flowcharts, and the like in the embodiments can be rearranged unless there is a contradiction.

Moreover, in the embodiments explained above, the specific operations performed by the eNB 100A (the gNB 100B, hereinafter the same) can be performed by another network node (device) . Moreover, functions of the eNB 100A can be provided by combining a plurality of other network nodes.

Moreover, the terms used in this specification and / or the terms necessary for understanding the present specification can be replaced with terms having the same or similar meanings. For example, a channel and / or a symbol can be replaced with a signal (signal). Also, the signal can be replaced with a message. Moreover, the terms "system" and "network" can be used interchangeably.

Furthermore, the used parameter and the like can be represented by an absolute value, can be expressed as a relative value from a predetermined value, or can be represented by corresponding other information. For example, the radio resource can be indicated by an index.

The eNB 100 (base station) can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use RRH: Remote Radio Head).

The term "cell" or "sector" refers to a part or all of the coverage area of a base station and / or a base station subsystem that performs communication service in this coverage. In addition, the terms "base station" "eNB", "cell", and "sector" can be used interchangeably. The base station can also be referred to as a fixed station, Node B, eNode B (eNB), gNode B (gNB), an access point, a femtocell, a small cell, and the like.

The UE 20 is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

As used herein, the phrase "based on" does not mean "based only on" unless explicitly stated otherwise. In other words, the phrase "based on" means both "based only on" and "based at least on".

Furthermore, the terms "including", "comprising", and variants thereof are intended to be inclusive in a manner similar to "having". Furthermore, the term "or" used in the specification or claims is intended not to be an exclusive disjunction.

Any reference to an element using a designation such as "first", "second", and the like used in the present specification generally does not limit the amount or order of those elements. Such designations can be used in the present specification as a convenient way to distinguish between two or more elements. Thus, the reference to the first and second elements does not imply that only two elements can be adopted, or that the first element must precede the second element in some or the other manner.

Throughout the present specification, for example, during translation, if articles such as a, an, and the in English are added, these articles shall include plurality, unless it is clearly indicated that it is not so according to the context.

As described above, the details of the present invention have been disclosed by using the embodiments of the present invention. However, the description and drawings which constitute part of this disclosure should not be interpreted so as to limit the present invention. From this disclosure, various alternative embodiments, examples, and operation techniques will be easily apparent to a person skilled in the art.

### INDUSTRIAL APPLICABILITY

According to the present invention, appropriate measurement report operations can be performed even during dual connectivity (DC) of LTE (eNB) and NR (gNB).

### EXPLANATION OF REFERENCE NUMERALS

10 radio communication system
100A eNB
100B gNB
110A, 110B radio communication unit
120A, 120B RRC controlling unit
130A, 130B measurement controlling unit
200 UE
210 radio communication unit
220 LTE-RRC controlling unit
230 NR-RRC controlling unit
240 measuring unit

## Claims

1. A radio communication system (10) supporting dual connectivity, wherein the radio communication system comprises a user device (200), a master node (100A) and a secondary node (100B), wherein the master node and the secondary node are simultaneously connected to the user device, wherein
the user device (200) comprises:
a radio communication unit (210) configured to receive a measurement configuration from each of the master node and the secondary node; and
a measuring unit (240) configured to measure reception quality of a target cell based on the measurement configuration received from each of the master node and the secondary node, and
the master node (100A) comprises a radio communication unit (110A) configured to transmit a measurement configuration to the user device,
the secondary node comprises a radio communication unit (110B) configured to transmit a measurement configuration to the user device,
the master node comprises a measurement controlling unit (130A) configured to share information on a number of carrier frequencies to be measured by the user device with the secondary node, and
the master node and the secondary node are configured to adjust a number of carrier frequencies to be measured by the user device such that said number does not exceed the number of measurements of carrier frequencies of the target cell that the user device can perform simultaneously based on the shared information.

2. A master node (100A) in a radio communication system supporting dual connectivity, wherein the radio communication system comprises a user device (200), the master node (100A) and a secondary node (100B), wherein the master node and the secondary node are simultaneously connected to the user device, the master node comprising:
a radio communication unit (110A) configured to transmit a measurement configuration to the user device,
a measurement controlling unit (130A) configured to share, with the secondary node, information on a number of carrier frequencies to be measured by the user device, and
a RRC controlling unit (120A) configured to adjust a number of carrier frequencies to be measured by the user device such that said number does not exceed the number of measurements of carrier frequencies of the target cell that the user device can perform simultaneously based on the shared information.

3. A secondary node (100B) in a radio communication system supporting dual connectivity, wherein the radio communication system comprises a user device (200), a master node (100A) and the secondary node (100B), wherein the master node and the secondary node are simultaneously connected to the user device, the secondary node comprising:
a radio communication unit (110B) configured to transmit a measurement configuration to the user device,
a measurement controlling unit (130B) configured to share, with the master node, information on a number of carrier frequencies to be measured by the user device, and
a RRC controlling unit (120B) configured to adjust a number of carrier frequencies to be measured by the user device such that said number does not exceed the number of measurements of carrier frequencies of the target cell that the user device can perform simultaneously based on the shared information.

4. A radio communication method in a radio communication system supporting dual connectivity, wherein the radio communication system comprises a user device (200), a master node (100A) and a secondary node (100B), wherein the master node and a secondary node are simultaneously connected to the user device, the method comprising the steps of:
sharing, by the master node with the secondary node, information on a number of carrier frequencies to be measured by the user device;
adjusting, by the master node and the secondary node, the number of carrier frequencies to be measured by the user device such that said number does not exceed the number of measurements of carrier frequencies of the target cell that the user device can perform simultaneously based on the shared information;
transmitting, by the master node and the secondary node, a measurement configuration to the user device;
receiving, by the user device, a measurement configuration from each of a master node and a secondary node; and
measuring, by the user device, reception quality of a target cell based on the measurement configurations.

## Patentansprüche

1. Funkkommunikationssystem (10), das duale Konnektivität unterstützt, wobei das Funkkommunikationssystem eine Benutzervorrichtung (200), einen Masterknoten (100A) und einen sekundären Knoten (100B) umfasst, wobei der Masterknoten und der sekundäre Knoten gleichzeitig mit der Benutzervorrichtung verbunden sind, wobei
die Benutzervorrichtung (200) Folgendes umfasst:
eine Funkkommunikationseinheit (210), die konfiguriert ist, um eine Messkonfiguration von dem Masterknoten sowie dem sekundären Knoten zu empfangen; und
eine Messeinheit (240), die konfiguriert ist, um eine Empfangsqualität einer Zielzelle auf Grundlage der von dem Masterknoten sowie dem sekundären Knoten empfangenen Messkonfiguration zu messen, und
der Masterknoten (100A) eine Funkkommunikationseinheit (110A) umfasst, die konfiguriert ist, um eine Messkonfiguration an die Benutzervorrichtung zu übertragen,
der sekundäre Knoten eine Funkkommunikationseinheit (110B) umfasst, die konfiguriert ist, um eine Messkonfiguration an die Benutzervorrichtung zu übertragen,
der Masterknoten eine Messsteuerungseinheit (130A) umfasst, die konfiguriert ist, um Informationen über eine Anzahl von Trägerfrequenzen, die von der Benutzervorrichtung zu messen sind, mit dem sekundären Knoten zu teilen, und
der Masterknoten und der sekundäre Knoten konfiguriert sind, um eine Anzahl von Trägerfrequenzen, die von der Benutzervorrichtung zu messen sind, so einzustellen, dass die Anzahl die Anzahl von Messungen von Trägerfrequenzen der Zielzelle, die die Benutzervorrichtung gleichzeitig durchführen kann, auf Grundlage der geteilten Informationen nicht übersteigt.

2. Masterknoten (100A) in einem Funkkommunikationssystem, das duale Konnektivität unterstützt, wobei das Funkkommunikationssystem eine Benutzervorrichtung (200), den Masterknoten (100A) und einen sekundären Knoten (100B) umfasst, wobei der Masterknoten und der sekundäre Knoten gleichzeitig mit der Benutzervorrichtung verbunden sind, wobei der Masterknoten Folgendes umfasst:
eine Funkkommunikationseinheit (110A), die konfiguriert ist, um eine Messkonfiguration an die Benutzervorrichtung zu übertragen,
eine Messsteuerungseinheit (130A), die konfiguriert ist, um Informationen über eine Anzahl von Trägerfrequenzen, die von der Benutzervorrichtung zu messen sind, mit dem sekundären Knoten zu teilen, und
eine RRC-Steuerungseinheit (120A), die konfiguriert ist, um eine Anzahl von Trägerfrequenzen, die von der Benutzervorrichtung zu messen sind, so einzustellen, dass die Anzahl die Anzahl von Messungen von Trägerfrequenzen der Zielzelle, die die Benutzervorrichtung gleichzeitig durchführen kann, auf Grundlage der geteilten Informationen nicht übersteigt.

3. Sekundärer Knoten (100B) in einem Funkkommunikationssystem, das duale Konnektivität unterstützt, wobei das Funkkommunikationssystem eine Benutzervorrichtung (200), einen Masterknoten (100A) und den sekundären Knoten (100B) umfasst, wobei der Masterknoten und der sekundäre Knoten gleichzeitig mit der Benutzervorrichtung verbunden sind, wobei der sekundäre Knoten Folgendes umfasst:
eine Funkkommunikationseinheit (110B), die konfiguriert ist, um eine Messkonfiguration an die Benutzervorrichtung zu übertragen,
eine Messsteuerungseinheit (130B), die konfiguriert ist, um Informationen über eine Anzahl von Trägerfrequenzen, die von der Benutzervorrichtung zu messen sind, mit dem Masterknoten zu teilen, und
eine RRC-Steuerungseinheit (120B), die konfiguriert ist, um eine Anzahl von Trägerfrequenzen, die von der Benutzervorrichtung zu messen sind, so einzustellen, dass die Anzahl die Anzahl von Messungen von Trägerfrequenzen der Zielzelle, die die Benutzervorrichtung gleichzeitig durchführen kann, auf Grundlage der geteilten Informationen nicht übersteigt.

4. Funkkommunikationsverfahren in einem Funkkommunikationssystem, das duale Konnektivität unterstützt, wobei das Funkkommunikationssystem eine Benutzervorrichtung (200), einen Masterknoten (100A) und einen sekundären Knoten (100B) umfasst, wobei der Masterknoten und ein sekundärer Knoten gleichzeitig mit der Benutzervorrichtung verbunden sind, wobei das Verfahren die Schritte umfasst zum:
Teilen, durch den Masterknoten mit dem sekundären Knoten, von Informationen über eine Anzahl von Trägerfrequenzen, die von der Benutzervorrichtung zu messen sind;
Einstellen, durch den Masterknoten und den sekundären Knoten, der Anzahl von Trägerfrequenzen, die von der Benutzervorrichtung zu messen sind, derart, dass die Anzahl die Anzahl von Messungen von Trägerfrequenzen der Zielzelle, die die Benutzervorrichtung gleichzeitig durchführen kann, auf Grundlage der geteilten Informationen nicht übersteigt;
Übertragen, durch den Masterknoten und den sekundären Knoten, einer Messkonfiguration an die Benutzervorrichtung;
Empfangen, durch die Benutzervorrichtung, einer Messkonfiguration von einem Masterknoten sowie einem sekundären Knoten; und
Messen, durch die Benutzervorrichtung, einer Empfangsqualität einer Zielzelle auf Grundlage der Messkonfigurationen.

## Revendications

1. Système de communication radio (10) prenant en charge une double connectivité, dans lequel le système de communication radio comprend un dispositif utilisateur (200), un nœud maître (100A) et un nœud secondaire (100B), dans lequel le nœud maître et le nœud secondaire sont connectés simultanément au dispositif utilisateur, dans lequel
le dispositif utilisateur (200) comprend :
une unité de communication radio (210) configurée pour recevoir une configuration de mesure à partir de chacun parmi le nœud maître et le nœud secondaire ; et
une unité de mesure (240) configurée pour mesurer une qualité de réception d'une cellule cible sur la base de la configuration de mesure reçue à partir de chacun parmi le nœud maître et le nœud secondaire, et
le nœud maître (100A) comprend une unité de communication radio (110A) configurée pour transmettre une configuration de mesure au dispositif utilisateur,
le nœud secondaire comprend une unité de communication radio (110B) configurée pour transmettre une configuration de mesure au dispositif utilisateur,
le nœud maître comprend une unité de commande de mesure (130A) configurée pour partager avec le nœud secondaire des informations sur un nombre de fréquences porteuses à mesurer par le dispositif utilisateur, et
le nœud maître et le nœud secondaire sont configurés pour ajuster un nombre de fréquences porteuses à mesurer par le dispositif utilisateur de telle sorte que ledit nombre ne dépasse pas le nombre de mesures de fréquences porteuses de la cellule cible que le dispositif utilisateur peut effectuer simultanément sur la base des informations partagées.

2. Nœud maître (100A) dans un système de communication radio prenant en charge une double connectivité, dans lequel le système de communication radio comprend un dispositif utilisateur (200), le nœud maître (100A) et un nœud secondaire (100B), dans lequel le nœud maître et le nœud secondaire sont connectés simultanément au dispositif utilisateur, le nœud maître comprenant :
une unité de communication radio (110A) configurée pour transmettre une configuration de mesure au dispositif utilisateur,
une unité de commande de mesure (130A) configurée pour partager, avec le nœud secondaire, des informations sur un nombre de fréquences porteuses à mesurer par le dispositif utilisateur, et
une unité de commande RRC (120A) configurée pour ajuster un nombre de fréquences porteuses à mesurer par le dispositif utilisateur de telle sorte que ledit nombre ne dépasse pas le nombre de mesures de fréquences porteuses de la cellule cible que le dispositif utilisateur peut effectuer simultanément sur la base des informations partagées.

3. Nœud secondaire (100B) dans un système de communication radio prenant en charge une double connectivité, dans lequel le système de communication radio comprend un dispositif utilisateur (200), un nœud maître (100A) et le nœud secondaire (100B), dans lequel le nœud maître et le nœud secondaire sont connectés simultanément au dispositif utilisateur, le nœud secondaire comprenant :
une unité de communication radio (110B) configurée pour transmettre une configuration de mesure au dispositif utilisateur,
une unité de commande de mesure (130B) configurée pour partager, avec le nœud maître, des informations sur un nombre de fréquences porteuses à mesurer par le dispositif utilisateur, et
une unité de commande RRC (120B) configurée pour ajuster un nombre de fréquences porteuses à mesurer par le dispositif utilisateur de telle sorte que ledit nombre ne dépasse pas le nombre de mesures de fréquences porteuses de la cellule cible que le dispositif utilisateur peut effectuer simultanément sur la base des informations partagées.

4. Procédé de communication radio dans un système de communication radio prenant en charge une double connectivité, dans lequel le système de communication radio comprend un dispositif utilisateur (200), un nœud maître (100A) et un nœud secondaire (100B), dans lequel le nœud maître et un nœud secondaire sont connectés simultanément au dispositif utilisateur, le procédé comprenant les étapes suivantes :
le partage, par le nœud maître avec le nœud secondaire, d'informations sur un nombre de fréquences porteuses à mesurer par le dispositif utilisateur ;
l'ajustement, par le nœud maître et le nœud secondaire, du nombre de fréquences porteuses à mesurer par le dispositif utilisateur de telle sorte que ledit nombre ne dépasse pas le nombre de mesures de fréquences porteuses de la cellule cible que le dispositif utilisateur peut effectuer simultanément sur la base des informations partagées ;
la transmission, par le nœud maître et le nœud secondaire, d'une configuration de mesure au dispositif utilisateur ;
la réception, par le dispositif utilisateur, d'une configuration de mesure à partir de chacun parmi un nœud maître et un nœud secondaire ; et
la mesure, par le dispositif utilisateur, de la qualité de réception d'une cellule cible sur la base des configurations de mesure.
